# EUROPÄISCHE PATENTSCHRIFT

(11) **EP 2 189 085 B1**
(45) Veröffentlichungstag und Bekanntmachung des Hinweises auf die Patenterteilung: **05.09.2012**
(21) Anmeldenummer: 09014351.2
(22) Anmeldetag: 17.11.2009
(51) Int. Cl.: A47J 31/44, A47J 31/60

(54) **Anordnung zum Aufschäumen von Milch und Aufschäumeinheit zur Verwendung in einer solchen Anordnung**
Assembly for foaming milk and foaming unit for use in such an assembly
Agencement pour le moussage de lait et unité de moussage pour l'utilisation dans un tel agencement

(30) Priorität: 20.11.2008 DE 102008058139
(43) Veröffentlichungstag der Anmeldung: 26.05.2010
(73) Patentinhaber: Spengler GmbH & Co. KG, 76646 Bruchsal (DE)
(72) Erfinder: Heuberger, Ralf, 76857 Albersweiler (DE); Felleisen, Uwe, 76307 Karlsbad Auerbach (DE)
(74) Vertreter: Kesselhut, Wolf

(56) Entgegenhaltungen:
- EP-A- 0 195 750
- EP-A1- 0 803 220
- EP-A1- 1 561 407
- WO-A-2005/074770
- WO-A-2005/112717
- WO-A2-2008/006623
- US-A- 5 490 447

## Beschreibung

Die Erfindung betrifft eine Anordnung zum Aufschäumen von Milch gemäß dem Oberbegriff von Anspruch 1.

Aus dem Stand der Technik sind Anordnungen zum Aufschäumen von Milch bekannt, die beispielsweise in Getränkeautomaten, insbesondere in Heißgetränkeautomaten zum Einsatz gelangen.

So beschreibt die EP 0 195 750 B 1 eine Anordnung zum Aufschäumen von Milch, bei welcher Heißdampf über eine venturiartige Düseneinrichtung in eine Emulgier- oder Entspannungskammer eingebracht wird, und im Austrittsbereich der Düse eine Saug- oder Mischkammer angeordnet ist, in welche hinein Milch über einen seitlichen Zufuhrkanal eingesaugt wird. Das Gemisch aus Milch und Heißdampf wird dann durch eine schmale Durchtrittsöffnung hindurch in die Entspannungskammer eingeleitet, aus deren Zentrum der so gebildete Milchschaum über einen nach unten weisenden Austrittsstutzen aus der Entspannungskammer entweicht.

Um die Konsistenz des Milchschaums zu verändern, wird im Bereich der Mischkammer zusätzlich über einen weiteren Kanal und ein verstellbares Ventil Umgebungsluft angesaugt, welche sich mit dem Heißdampf und der ebenfalls angesaugten Milch in der Mischkammer vermischt.

Bei der beschriebenen Schrift ergibt sich aufgrund der zahlreichen Bohrungen und Kanäle im Bereich der venturiartigen Düse das Problem, dass über die Umgebungsluft sehr leicht Keime in die Mischkammer sowie in die Entspannungskammer eindringen können, die sich - bedingt durch die Temperaturen der Bauteile - schnell vermehren und dann in nachteiliger Weise über die Milchzuleitung in den Milchvorratsbehälter ausbreiten können. Ungeachtet dessen wird das Heißgetränk, beispielsweise Kaffee oder Tee, über eine separate Getränke-Zuleitung zugeführt, wodurch das Heißgetränk und der aus der Entspannungskammer austretende Milchschaum nicht unmittelbar nach der Entstehung des Milchschaums zusammen auf dem kürzesten Wege in ein Ausgabegefäß eingebracht werden können. Zudem wird der Milchschaum beim Einbringen in das Gefäß durch das von der Seite aus einströmende Heißgetränk zumindest teilweise wieder zerstört, bzw. in seiner Konsistenz beeinträchtigt.

Weiterhin ist aus der WO 2008/006623 A2 eine Anordnung zum Aufschäumen von Milch bekannt, bei der Milch aus einem Milch-Vorratsbehälter über eine peristaltische Pump-Einrichtung einer Aufschäumeinheit zugeführt wird, die ein Gehäuse besitzt, in welches Heißdampf und Luft über getrennte Zuleitungen von oben her einer Entspannungskammer zugeführt werden, aus welcher der Milchschaum an der Unterseite durch einen rohrabschnittsartigen Stutzen austritt. Da sich die Milchzuleitung sowie die Aufschäumeinheit in gleicher Weise wie bei der zuvor genannten Anordnung nach der EP 0 195 750 B 1 nur schlecht reinigen lassen und die Gefahr des Entstehens von Keimen, die in das Heißgetränk sowie auch in die Frischmilch gelangen können, nicht unerheblich ist, ist der Aufschäumeinheit eine Reinigungseinrichtung zugeordnet, welche die Zufuhrleitung für die Frischmilch sowie auch die Aufschäumeinheit in aufwändiger Weise mit Heißwasser oder Dampf durchspült.

Demgemäß ist es eine Aufgabe der vorliegenden Erfindung, eine Anordnung zum Aufschäumen von Milch zu schaffen, welche einen Milchschaum mit einer hohen Qualität liefert und bei welcher die Gefahr einer Ausbreitung von Keimen in den ausgegebenen Milchschaum verringert ist.

Diese Aufgabe wird erfindungsgemäß durch eine Anordnung zum Aufschäumen von Milch mit den Merkmalen von Anspruch 1 gelöst.

Gemäß der Erfindung umfasst eine Anordnung zum Aufschäumen von Milch in einem Heißgetränkeautomaten, beispielsweise in einem Automaten zur Ausgabe von Capuccino, Kaffee oder Tee, eine Aufschäumeinheit und einen Heißdampferzeuger, welcher mit der Aufschäumeinheit über eine erste Zuleitung zur Zufuhr von Heißdampf verbunden ist. Die erfindungsgemäße Anordnung umfasst weiterhin eine Milch-Fördereinrichtung in Form einer peristaltischen Pumpe, die aufzuschäumende Milch aus einem Milch-Vorratsbehälter über eine zweite flexible Zuleitung in die Aufschäumeinheit fördert, in der der Heißdampf zusammen mit der Milch unter Zufuhr von Umgebungsluft zu Milchschaum emulgiert wird.

Die erfindungsgemäße Anordnung zeichnet sich dadurch aus, dass die zweite Zuleitung unlösbar mit der Aufschäumeinheit verbunden ist, und der Heißdampf und die Umgebungsluft der Aufschäumeinheit gemeinsam über die erste Zuleitung zugeführt werden, wobei die Aufschäumeinheit zusammen mit der zweiten Zuleitung als Einheit aus dem Getränkeautomaten entnommen und in kürzester Zeit durch eine unverschmutzte neue Einheit ersetzt werden kann.

Die erfindungsgemäße Anordnung besitzt den Vorteil, dass keine Reinigungseinrichtung benötigt wird, welche die Zuleitungen beispielsweise nach einer vorgegeben Zeitdauer durchspült, was in der Praxis erfahrungsgemäß nur zu einer unzureichenden Beseitigung von Keimen führt, die beispielsweise über die Umgebungsluft in die Aufschäumeinheit sowie die Milchzuleitung eintreten. Da bei der erfindungsgemäßen Anordnung der Heißdampf und die Umgebungsluft über die erste Zuleitung gemeinsam zugeführt werden, werden Keime, die in der Umgebungsluft enthalten sind, durch den Heißdampf bereits auf dem Weg zur Aufschäumeinheit abgetötet und können sich in Folge dessen auch nicht mehr in der Aufschäumeinheit, bzw. in der Milchzuleitung, d.h. der zweiten Zuleitung ausbreiten.

Durch die gemeinsame Zufuhr von Heißdampf und Umgebungsluft wird ferner die Möglichkeit eröffnet, dass diese Zuleitung bei einem Austausch von Aufschäumeinheit und Milch-Zuleitungsschlauch - die zusammen eine unlösbare Einheit bilden - nicht mit ausgetauscht werden muss, wodurch sich die Kosten für ein Recycling der Einheit in vorteilhafter Weise reduzieren.

Gemäß der bevorzugten Ausführungsform der Erfindung bestehen die Aufschäumeinheit und die zweite Zuleitung für die aufzuschäumende Milch aus unterschiedlichen Materialien, die bevorzugt jedoch thermisch flüssigkeitsdicht miteinander verschweißbar oder auch verklebbar sind. Als Materialien kommen insbesondere POM für die Aufschäumeinheit und ein flexibles Kunststoffmaterial wie insbesondere Silikon für die zweite Zuleitung zum Einsatz. Hierdurch ergibt sich der Vorteil, dass die Aufschäumeinheit und die zweite Zuleitung bereits bei der nachfolgend noch näher im Detail beschriebenen Herstellung der Aufschäumeinheit durch thermisches Verschweißen sozusagen in einem Arbeitsgang in ein und derselben Produktionseinrichtung unlösbar miteinander verbunden werden können. Gleichzeitig kann die verschmutzte Einheit nach dem Gebrauch beispielsweise durch Einschmelzen oder Verbrennen des Materials in kostengünstiger Weise recycelt werden, ohne dass zuvor eine aufwändige mechanische Trennung der beiden Bauteile erforderlich ist.

Gemäß einer weiteren Ausführungsform der Erfindung kann es vorgesehen sein, dass die erste Zuleitung zur Zufuhr des Gemischs aus Heißdampf und Umgebungsluft ebenfalls unlösbar mit der Aufschäumeinheit und unlösbar mit dem Heißdampferzeuger verbunden ist, so dass auch diese erste Zuleitung - die in diesem Falle bevorzugt aus dem selben Material wie die zweite Zuleitung besteht, - gleichzeitig mit ausgetauscht und bevorzugt durch ein Einschmelzen oder Verbrennen recycelt werden kann.

Nach einem weiteren der Erfindung zugrundeliegenden Gedanken wird die Umgebungsluft über eine Luft-Zufuhreinrichtung, insbesondere eine elektrisch betätigte Luftpumpe zugefiihrt, die strömungsmäßig mit der ersten Zuleitung verbunden ist. Hierbei ist es hinsichtlich des konstruktiven Aufbaus von Vorteil, wenn der Heißdampf-Erzeuger und die Luft-Zufuhreinrichtung jeweils über die beiden einander gegenüberliegenden Einlässe eines T- oder auch Y-förmigen Zuleitungsabschnitts verbunden sind, welcher über dritten Anschluss an die erste Zuleitung angeschlossen wird. Durch den Einsatz eines T- oder Y-förmigen Zuleitungsabschnitts ergibt sich der Vorteil, dass der Heißdampf und die Umgebungsluft sich ohne den Einsatz einer zusätzlichen Mischkammer nicht nur beim Einströmen in die erste Zuleitung sondern auch während des Durchströmens der gesamten Länge der ersten Zuleitung miteinander vermischen. Hierdurch wird gegenüber einer Durchmischung innerhalb einer vergleichsweise kleinen Mischkammer aufgrund des zeitlich verlängerten Mischvorgangs ein sehr homogenes Dampf-Luftgemisch erhalten.

Weiterhin kann es vorgesehen sein, dass die zweite Zuleitung zur Zufuhr der Frischmilch über einen Einweg-Verschluss, der bevorzugt ebenfalls unlösbar mit der zweiten Zuleitung verbunden ist, an den Milch-Vorratsbehälter angeschlossen wird, derart, dass sich die zweite Zuleitung nur durch eine mechanische Zerstörung des Einweg-Verschlusses wieder vom Milch-Vorratsbehälter trennen lässt. Hierdurch wird sichergestellt, dass nach dem Entleeren des Milch-Vorratsbehälters, der beispielsweise ein Einweg-Behälter mit einem Fassungsvermögen von z.B. 101 sein kann, zwangsweise auch die ersten Zuleitung und die damit unlösbar verbundene Aufschäumeinheit gewechselt werden müssen, da der Einweg-Verschluss nach seinem Lösen vom Milch-Vorratsbehälter mechanisch zerstört wird und nicht wieder auf einen neuen Milch-Vorratsbehälter aufgesetzt werden kann. Durch die zuvor beschriebene Maßnahme wird für den Betreiber eines Getränkeautomaten, in welchem die Erfindung zum Einsatz gelangt, die Gewähr erhalten, dass bei einem Wechsel des Milch-Vorratsbehälters ebenfalls keine Keime, die sich über einen längeren Zeitraum hinweg im Bereich des Deckels ansammeln, über das offene Ende der ersten Zuleitung in diese eintreten und sich in der zugeführten Milch vermehren können.

Nach einem weiteren der Erfindung zugrundeliegenden Gedanken werden der Heißdampferzeuger und die Milch-Fördereinrichtung über eine elektronische Steuerungseinrichtung gesteuert. Die elektronische Steuerungseinrichtung verändert hierbei die Menge an erzeugtem Heißdampf beispielsweise über ein dem Heißdampferzeuger nachgeordnetes elektrisch betätigbares Ventil und steuert die Menge an aus dem Milch-Vorratsbehälter geförderter Milch insbesondere über die Drehzahl des Antriebsmotors der peristaltischen Pumpeinrichtung. Die Veränderung der zugeführten Heißdampfmenge bzw. der zugeführten Milchmenge erfolgt hierbei bevorzugt in Abhängig von der Temperatur der Umgebungsluft und/oder der Luftfeuchtigkeit der Umgebungsluft und/oder dem relativen Luftdruck der Umgebungsluft, die durch einen mit der elektronischen Steuerungseinrichtung verbundenen Sensor erfasst werden. Um bei dieser Ausführungsform der Erfindung stets eine möglicht gleichbleibende hohe Qualität von Milchschaum zu gewährleisten, werden die Vorgabewerte für die geförderte Milchmenge, bzw. Pumpendrehzahl der peristaltischen Pumpeinrichtung sowie die Menge an Heißdampfvorzugsweise als empirisch ermittelte Vorgabewerte in einem elektronischen Speicher der Steuerungseinrichtung nach Art eines Kennfeldes abgelegt. Zusätzlich wird bevorzugt ebenfalls noch die Menge an momentan geförderter Umgebungsluft bevorzugt über die Drehzahl einer die Luft fördernde, elektrischen Luftpumpe mit verändert. Hierdurch eröffnet sich die Möglichkeit, dass die Menge an Heißdampf, geförderter Milch und zugeführter Umgebungsluft durch die elektronische Steuerungseinrichtung in Abhängigkeit von der jeweiligen Temperatur der Umgebungsluft, der Luftfeuchtigkeit sowie dem Druck der Umgebungsluft automatisiert in der Weise eingestellt werden, dass der in der Aufschäumeinheit erzeugte Milchschaum eine optimale Konsistenz besitzt.

Bei der erfindungsgemäßen Anordnung zum Aufschäumen von Milch wird bevorzugt eine Aufschäumeinheit verwendet, die ein Gehäuse aufweist, welches eine Mischkammer umfasst, welcher der Heißdampf bevorzugt zusammen mit der Umgebungsluft über die erste Zuleitung und die Milch aus dem Milch-Vorratsbehälter über die zweite Zuleitung zugeführt werden.

Der in der Mischkammer erzeugte Milchschaum wird im Anschluss daran über einen Milchschaum-Zufuhrkanal in eine bevorzugt zylinderförmige Entspannungskammer des Gehäuses eingeleitet, die an ihrer Oberseite - nachfolgend als erste Seite bezeichnet - durch einen Deckel verschlossen ist und die an ihrer Unterseite - nachfolgend als zweite Seite bezeichnet - einen rohrabschnittsartigen Auslassstutzen für den Milchschaum aufweist. Die Aufschäumeinheit zeichnet sich dadurch aus, dass innerhalb des Auslassstutzens ein geschlossener Getränke-Zufuhrkanal für das Heißgetränk, insbesondere für Kaffee oder Tee, verläuft, der sich von der ersten Seite aus durch die Entspannungskammer hindurch erstreckt und dessen Außenfläche unter Bildung eines spaltförmigen Austrittskanals für den Milchschaum zumindest abschnittsweise im Abstand zur Innenfläche des Auslassstutzens angeordnet ist.

Die erfindungsgemäße Aufschäumeinheit besitzt den Vorteil, dass das Heißgetränk sowie auch der Milchschaum im Wesentlichen gleichzeitig von oben her in ein unterhalb des Auslassstutzens angeordnetes Gefäß, beispielsweise einen Becher, eingeleitet werden, wobei das Heißgetränk vorzugsweise zentral in das Gefäß einströmt und der Milchschaum radial außen liegend zum Getränk in das Gefäß eingeleitet wird. Hierdurch kann in vorteilhafter Weise zum einen die Zeitdauer zum Befüllen des Gefäßes verkürzt werden, und zum anderen wird dafür gesorgt, dass der Milchschaum durch das Einfüllen des Heißgetränks nicht nachteilig beeinträchtigt wird.

Bei dieser Ausführungsform der Erfindung ergibt sich insbesondere durch den Einsatz einer Entspannungskammer mit einem zylinderförmigen Querschnitt - nachfolgend auch als zylindrische Entspannungskammer bezeichnet - der Vorteil, dass der spaltförmige Austrittskanal als ein gewünschten Falls durch einen oder mehrere Stützstege unterteilter Ringspalt ausgestaltet werden kann, wenn der Getränke-Zufuhrkanal durch das Zentrum der zylindrischen Entspannungskammer hindurch geführt ist und der rohrabschnittsartige Auslassstutzen koaxial zu diesem verläuft. Hierdurch ergibt sich der Vorteil, dass die Einleitung des Milchschaums in das Gefäß im Wesentlichen gleichmäßig erfolgt, wodurch sich eine optisch ansprechende symmetrische Schaumkrone bildet.

Nach einer weiteren Ausfiihrungsform der Erfindung ist die Mischkammer bevorzugt im Bereich der Peripherie der Entspannungskammer angeordnet, und der Milchschaum-Zufuhrkanal mündet im Wesentlichen tangential in die Entspannungskammer ein, derart, dass der aus der Mischkammer über den Milchschaum-Zufuhrkanal in die Entspannungskammer eintretende Milchschaum vor dem Austritt aus dem spaltförmigen Austrittskanal innerhalb der Entspannungskammer zirkuliert.

Durch die Zirkulation des Milchschaums innerhalb der Entspannungskammer ergibt sich der Vorteil, dass dem Milchschaum eine längere Zeitdauer zur Verfügung steht, in welcher sich die beim Emulgationsprozess erzeugten Milchschaumblasen bis zu ihrer endgültigen Form ausbilden können, bevor sie durch den Austrittskanal aus der Entspannungskammer austreten.

Um die Homogenität des Milchschaums zu steigern, kann es hierbei weiterhin vorgesehen sein, dass in der Entspannungskammer Mittel angeordnet sind, die den zirkulierenden Milchschaum-Strom stören und hierdurch innerhalb der zirkulierenden Strömung weitere Strömungswirbel erzeugen, die für eine Durchmischung des Milchschaums während seiner Zirkulation innerhalb der Entspannungskammer sorgen.

Die Mittel zum Stören des Milchschaum-Stroms umfassen bei der bevorzugten Ausführungsform der Erfindung wenigstens eine, bevorzugt jedoch vier rippenartige Vorsprünge, die insbesondere im Bereich des Zentrums des zirkulierenden Milchschaumstromes, in vorteilhafter Weise an der Außenseite des sich durch die Entspannungskammer hindurch erstreckenden Getränke-Zufuhrkanals, angeordnet sind. Hierdurch ergibt sich eine besonders kompakte Bauweise der Aufschäumeinheit mit einem geringen Einsatz an Kunststoffmaterial, aus welchem das Gehäuse der Aufschäumeinheit gefertigt wird.

Um das Gehäuse in besonders effizienter Weise zu fertigen, besteht dieses bevorzugt aus insgesamt drei einstückigen Formteilen, die jeweils einzeln im Spritzgussverfahren hergestellt und im Anschluss daran durch Verschweißen mit Hilfe von Ultraschall oder auch durch Verkleben oder ein sonstiges thermisches Verbindungsverfahren unlösbar mit einander verbunden werden. Ein erstes Formteil umfasst bei dieser Ausführungsform der Erfindung die Entspannungskammer mit dem daran geformten rohrabschnittsartigen Auslassstutzen für den Milchschaum und der im Gehäuse geformten Mischkammer. Ein zweites Formteil umfasst weiterhin den Deckel mit dem integral an diesem geformten Getränke-Zufuhrkanal, einem zur ersten Seite hin offenen rohrabschnittsartigen Zufuhrstutzen für das Heißdampf-Luftgemisch sowie einem im rechten Winkel in diesen Zufuhrstutzen einmündenden Zufuhrstutzen für die Milch. Schließlich umfasst ein drittes Formteil einen von der ersten Seite aus in den rohrabschnittsartigen Zufuhrstutzen für den Heißdampf einsetzbaren Düsenkopf sowie einen an diesem geformten Anschlussstutzen zum Anschluss der ersten Zuleitung für das Gemisch an zugeführtem Heißdampf und Umgebungsluft.

Die drei Formteile sind hierbei bevorzugt aus ein und demselben Material, insbesondere aus POM gefertigt, wodurch sie sich sehr kostengünstig im Spritzgussverfahren als Massenware herstellen und nach dem mechanischen Zusammenfügen durch den Einsatz von Ultraschall oder einem anderen bekannten thermischen Fügeverfahren flüssigkeitsdicht verschweißen lassen, wobei die zweite Zuleitung für die zugeführte Milch und gegebenenfalls auch die erste Zuleitung für das Heißdampf-Luftgemisch ebenfalls in einem Arbeitsgang unlösbar mit den zugehörigen Stutzen verschweißt werden.

Nach einer weiteren Ausfiihrungsform der Erfindung, die in vorteilhafter Weise die Erzeugung größerer Mengen von Milchschaum ermöglicht, umfasst das Gehäuse neben der Entspannungskammer eine bevorzugt spiegelbildlich zur Entspannungskammer aufgebaute weitere Entspannungskammer mit einem daran angeordneten weiteren Auslassstutzen und einem durch diese hindurch tretenden weiteren Getränke-Zufuhrkanal. Die weitere Entspannungskammer ist über einen weiteren Milchschaum-Zufuhrkanal mit der Mischkammer in Strömungsverbindung, die bevorzugt zentral zwischen den beiden Entspannungskammern angeordnet ist. Der Milchschaum wird von der zentral angeordneten Mischkammer von der ersten Seite aus über die spiegelbildlich angeordneten beiden Milchschaum-Zufuhrkanäle in die beiden Entspannungskammern eingeleitet, aus denen der Milchschaum dann jeweils über den bevorzugt zentral angeordneten Auslassstutzen der entsprechenden Entspannungskammer in ein unterhalb abgestelltes Gefäß austritt.

Die Erfindung wird nachfolgend mit Bezug auf die Zeichnungen anhand der bevorzugten Ausführungsform der Erfindung beschrieben.

In den Zeichnungen zeigen:
- Fig. 1: eine schematische Darstellung einer erfindungsgemäßen Anordnung zum Aufschäumen von Milch zur Veranschaulichung der zugehörigen Komponenten,

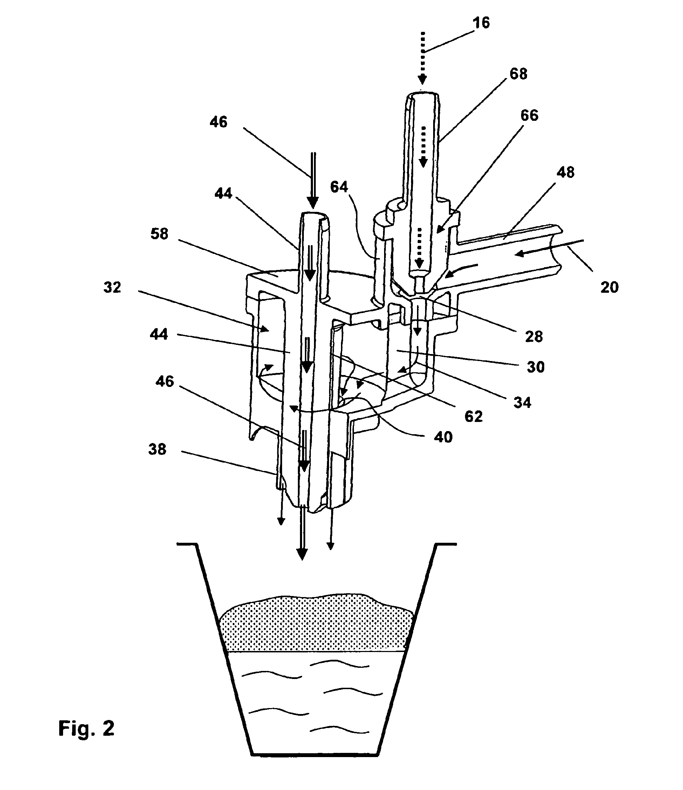

- Fig. 2: eine vergrößerte teilweise abgebrochene Darstellung der erfindungsgemäßen Aufschäumeinheit mit einem unterhalb von dieser angeordneten Gefäß,
- Fig. 3: eine schematische Explosionsdarstellung der drei Formteile, welche zur Bildung der Aufschäumeinheit flüssigkeitsdicht miteinander verschweißt werden, und
- Fig. 4: eine schematische, teilweise abgebrochene räumliche Darstellung einer erfindungsgemäßen Aufschäumeinheit mit zwei Entspannungskammern und einer zentralen Mischkammer.

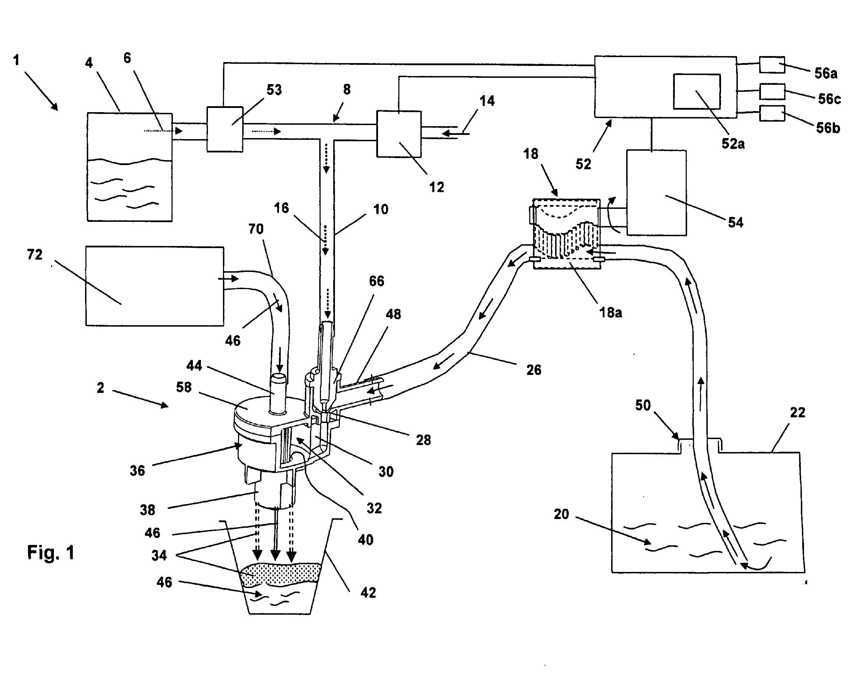

Wie in Fig. 1 gezeigt ist umfasst eine Anordnung 1 zum Aufschäumen von Milch in einem aus darstellungstechnischen Gründen nicht näher gezeigten Getränkeautomaten eine Aufschäumeinheit 2 sowie einen schematisch dargestellten Heißdampferzeuger 4, welcher in bekannter Weise einen Boiler umfasst, der aus kochendem Wasser Heißdampf 6 erzeugt, welcher über die erste Seite eines T-förmigen Leitungsabschnitts 8 über eine erste Zuleitung 10 der Aufschäumeinheit 2 zugeführt wird.

An den zweiten Einlass des T-förmigen Leitungsabschnitts 8 ist eine Luft-Zufuhreinrichtung 12 angeschlossen, insbesondere eine Luftpumpe, die Umgebungsluft 14 ansaugt, welche in dem T-förmigen Leitungsabschnitt 8 mit dem Heißdampf vermischt wird und der Aufschäumeinheit 2 als Heißdampf-Luftgemisch 16 zugeführt wird.

Die erfindungsgemäße Anordnung 1 umfasst weiterhin eine Milchfördereinrichtung in Form einer bekannten peristaltischen Pumpeinrichtung 18, die die aufzuschäumende Milch 20 aus einem Milch-Vorratsbehälter 22 über eine zweite flexible Zuleitung 26 in die Aufschäumeinheit 2 fördert. In der Aufschäumeinheit 2 wird die aus dem Milch-Vorratsbehälter 22 geförderte Frischmilch mit dem Heißdampf-Luftgemisch 16 in einer Mischkammer 28 vermischt und tritt aus dieser über einen Zufuhrkanal 30 als Milchschaum 34 in eine Entspannungskammer 32 ein, die in der Darstellung von Fig. 1 teilweise geöffnet dargestellt ist.

Aus der Entspannungskammer 32 tritt der Milchschaum 34 im Anschluss daran über einen an der Unterseite des Gehäuses 36 angeordneten Austrittsstutzen 38 über einen spaltförmigen Austrittskanal, der bevorzugt als Ringspalt 40 ausgeführt ist, in ein unterhalb angeordnetes Gefäß 42 aus.

Innerhalb des Austrittsstutzens 38 erstreckt sich weiterhin ein koaxial zu diesem von der Oberseite zur Unterseite durch das Gehäuse 36 hindurch verlaufender Getränkezufuhrkanal 44, der innerhalb des Gehäuses 36 flüssigkeitsdicht geführt ist und durch den ein Heißgetränk 46 durch die Entspannungskammer 32 hindurchgeleitet wird, welches zusammen mit dem Milchschaum 34 von oben her in das Gefäß 42 eingeleitet wird.

Wie der Darstellung von Fig. 1 weiterhin entnommen werden kann, ist die Zweitzuleitung 26 durch thermisches Verschweißen oder Verkleben unlösbar mit einem Stutzen 48 der Aufschäumeinheit 2 verbunden, derart, dass die Aufschäumeinheit 2 nur zusammen mit der zweiten Zuleitung 26 als Einheit aus dem nicht näher dargestellten Getränkeautomaten entnommen werden kann, um diese gegen eine neue, unverschmutzte Aufschäumeinheit 2 auszutauschen.

Hierzu wird die zweite Zuleitung 26 beispielsweise durch Aufklappen eines entsprechenden Gehäuseteils 18a, an welchem sich die zweite Zuleitung 26 abstützt, wenn die peristaltische Pumpeinrichtung 18 die Zuleitung nach Art einer laufenden Welle mittels eines darin enthaltenen schraubenartigen Exzenters zusammendrückt, entnommen und die entsprechende zweite Zuleitung der neuen Aufschäumeinheit 2 in das Gehäuse der peristaltischen Pumpe 18 eingesetzt.

Am freien Ende der zweiten Zuleitung 26 ist ein Einweg-Verschluss 50 bevorzugt ebenfalls unlösbar mit der zweiten Zuleitung verbunden, der mit mechanischen Sicherungsmitteln, wie beispielsweise Stegen aus Kunststoffinaterial oder dergleichen versehen ist, die ein Aufsetzen des Einweg-Verschlusses 50 auf einen entsprechenden Stutzen des Milch-Vorratsbehälters 22 erlauben, jedoch beim Abziehen des Verschlusses 50 vom entleerten Milch-Vorratsbehälter 22 mechanisch zerstört werden, beispielsweise brechen, so dass sich der Verschluss 50 lediglich einmal auf einen frischen Milch-Vorratsbehälter 22 aufsetzen lässt.

Wie der Darstellung von Fig. 1 weiterhin entnommen werden kann, umfasst die erfindungsgemäße Anordnung 1 eine elektronische Steuerungseinrichtung 52, welche die Menge an zugeführtem Heißdampf 6 über ein Ventil 53, die Menge an durch die peristaltische Pumpeinrichtung 18 geförderter Milch 20 durch eine entsprechende Veränderung der Drehzahl des Motors 54 der peristaltischen Pumpe 18, sowie bevorzugt auch die Menge der durch die Luft-Zufuhreinrichtung 12 geförderten Umgebungsluft 14 steuert. Die elektronische Steuerungseinrichtung 52 ist hierzu mit einem Sensor 56a verbunden, welcher die Temperatur der Umgebungsluft bestimmt. Zusätzlich kann die elektronische Steuerungseinrichtung mit einem Luftdrucksensor 56b bzw. mit einem Feuchtigkeitssensor 56c verbunden sein, welcher die relative Luftfeuchtigkeit der Umgebungsluft umfasst.

In Abhängigkeit von den erfassten Werten für die Temperatur, den Druck und die Feuchtigkeit der Umgebungsluft 14 ermittelt die elektronische Steuerungseinrichtung 52 dann die zugeordneten Stellgrößen für die Menge an zuzuführendem Heißdampf, zuzuführender Umgebungsluft und durch die peristaltische Pumpeinrichtung zu fördernder Frischmilch 20, wobei die entsprechenden Vorgabewerte für die Heißdampfmenge, die Luftmenge und die Milchmenge zuvor als empirische Werte in Form eines Kennfeldes in einem elektronischen Speicher 52a der elektronischen Steuerungseinrichtung 52 abgelegt sind.

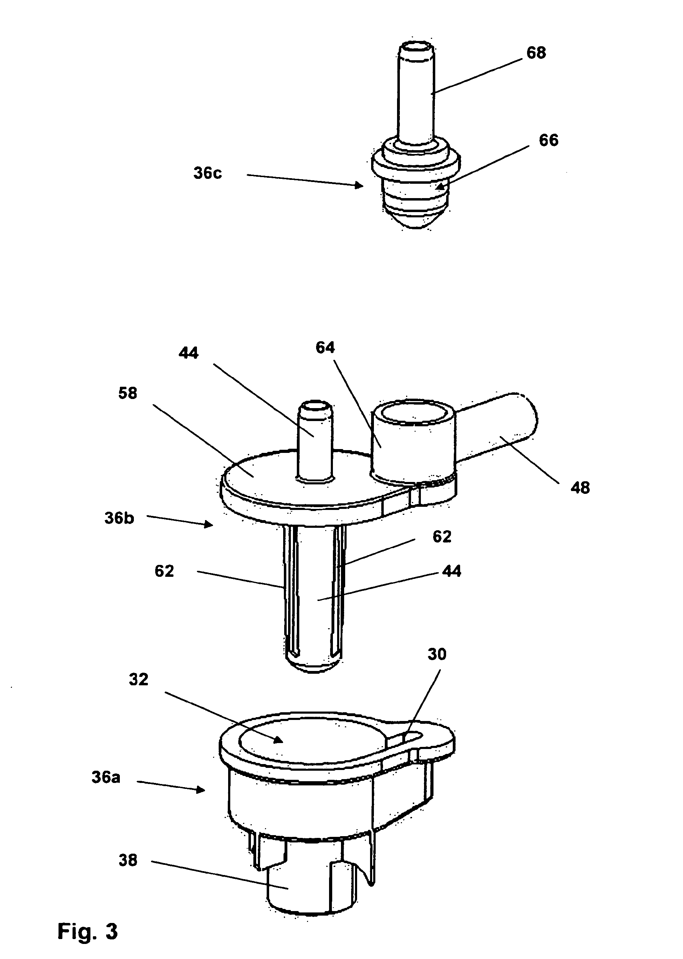

Wie weiterhin der Darstellung von Fig. 3 entnommen werden kann, ist das Gehäuse 36 der erfindungsgemäßen Aufschäumeinheit 2 bevorzugt aus drei im Kunststoff-Spritzgussverfahren hergestellten Formteilen zusammengesetzt, welche nach dem mechanischen Zusammenfügen durch ein bekanntes thermisches Schweißverfahren, beispielsweise durch Ultraschallschweißen, flüssigkeitsdicht miteinander verbunden werden.

Hierbei umfasst ein erstes Formteil 36a die Entspannungskammer 32 mit dem daran geformten rohrabschnittartigen Auslassstutzen 38 für den Milchschaum 34 und den tangential in die Entspannungskammer einmündenden Zufuhrkanal 30 für den Milchschaum 34.

Ein zweites Formteil 36b umfasst weiterhin den Deckel 58, der die Entspannungskammer 32 nach oben hin flüssigkeitsdicht verschließt, mit dem integral an diesem geformten Getränke-Zufuhrkanal 44, welcher sich nach unten zur zweiten Seite hin verdickt und an welchem mehrere rippenartige Vorsprünge 62 ausgeformt sind, die die Strömung des innerhalb der Entspannungskammer 32 zirkulierenden Milchschaums stören und diesen zusätzlich verwirbeln. Am zweiten Formteil 36 b ist zusätzlich ein zur ersten Seite hin, d.h. nach oben hin offener rohrabschnittsartiger Zufuhrstutzen 64 für das Heißdampf-Luftgemisch 16 sowie der bevorzugt im rechten Winkel in diesen einmündender Stutzen 48 für die Frischmilch 20 geformt, wobei im unteren Teil des Stutzens 64 für das Heißdampf-Luftgemisch 16 ebenfalls die in Fig. 3 nicht dargestellte Mischkammer 28 gebildet ist.

Schließlich umfasst ein drittes Formteil 36c einen von der ersten Seite aus in den rohrabschnittartigen Zufuhrstutzen 64 einsetzbaren Düsenkopf 66, an welchem integral ein weiterer rohrabschnittsartiger Zufuhrstutzen 68 für die erste Zuleitung 10 geformt ist.

Die erste Zuleitung 10 kann hierbei insbesondere lösbar auf den Stutzen 68 aufsteckbar sein, in gleicher Weise wir die Getränke-Zuleitung 70, über welche das Heißgetränk aus einem Getränke-Vorratsbehälter 72 dem Getränke-Zufuhrkanal 44 zugeführt wird, um durch Lösen der Zuleitungen 10 und 70 und Öffnen des Gehäuses der peristaltischen Pumpeinrichtung 18 die Aufschäumeinheit 2 zusammen mit der zweiten Zuleitung für die Frischmilch 20 aus dem Getränkeautomaten zu entnehmen und gegen eine neue Einheit auszutauschen.

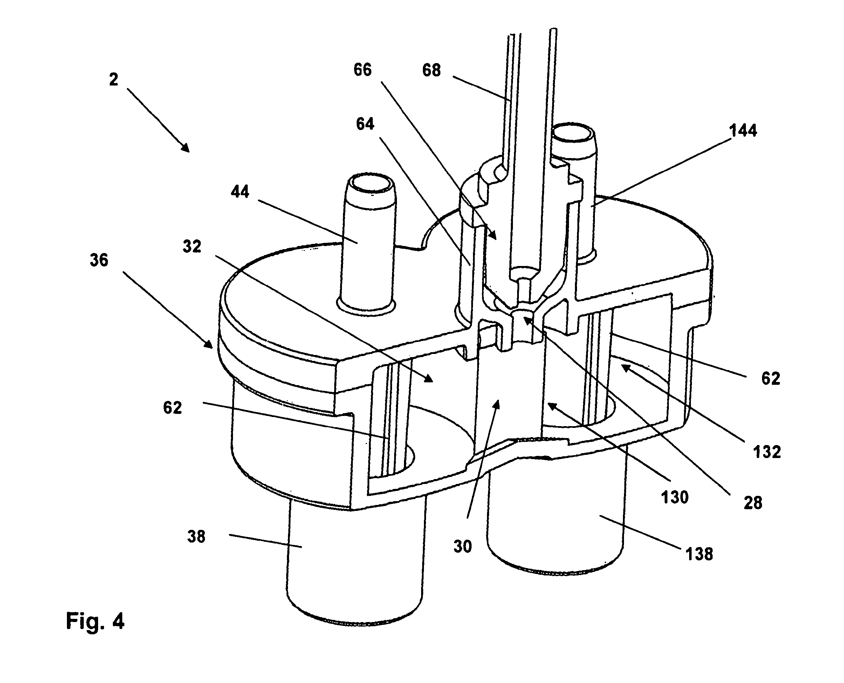

Bei der in Fig. 4 gezeigten Ausführungsform der Erfindung enthält das Gehäuse 36 neben der Entspannungskammer 32 eine weitere spiegelbildlich ausgestaltete Entspannungskammer 132, an der ein weiterer rohrabschnittartiger Auslassstutzen 138 geformt ist, innerhalb von welchem ein weiterer, koaxial angeordneter Getränke-Zufuhrkanal 144 verläuft, der sich durch das Gehäuse 2 von oben her hindurch erstreckt. Die weitere Entspannungskammer 132 ist über einen weiteren Milchschaum-Zufuhrkanal 130 mit der Mischkammer 28 in Strömungsverbindung, die bevorzugt zentral zwischen den beiden Entspannungskammern 32 und 132 angeordnet ist. Der Milchschaum 34 wird von der zentral angeordneten Mischkammer 28 von der ersten Seite aus, d.h. von oben her, über die spiegelbildlich angeordneten beiden Milchschaum-Zufuhrkanäle 30 und 130 in die beiden Entspannungskammern 32, 132 eingeleitet, aus denen der Milchschaum 34 anschließend jeweils über den bevorzugt zentral angeordneten Auslassstutzen 38, 138 der entsprechenden Entspannungskammer 32, 132 in ein jeweils darunter abgestelltes Gefäß 42 austritt. Mit Ausnahme des spiegelbildlichen Aufbaus der zweiten Entspannungskammer 132 weist diese bevorzugt dieselben Komponenten und denselben Grundaufbau wie die Entspannungskammer 32 auf

### Liste der Bezugszeichen

- 1: erfindungsgemäße Anordnung
- 2: Aufschäumeinheit
- 4: Heißdampferzeuger
- 6: Heißdampf
- 8: T-förmiger Leitungsabschnitt
- 10: erste Zuleitung
- 12: Luft-Zufuhreinrichtung
- 14: Umgebungsluft
- 16: Heißdampf-Luftgemisch
- 18: peristaltische Pumpeinrichtung
- 18a: aufklappbarer Gehäuseteil
- 20: aufzuschäumende Milch
- 22: Milch-Vorratsbehälter
- 26: zweite Zuleitung für Milch
- 28: Mischkammer
- 30: Zufuhrkanal für Milchschaum
- 32: Entspannungskammer
- 34: Milchschaum
- 36: Gehäuse
- 36a: 1. Formteil
- 36b: 2. Formteil
- 36c: 3. Formteil
- 38: rohrabschnittartiger Auslassstutzen
- 40: spaltförmiger Austrittskanal
- 42: Gefäß
- 44: Getränke-Zufuhrkanal
- 46: Heißgetränk
- 48: Stutzen zum Anschluss der zweiten Zuleitung
- 50: Einweg-Verschluss
- 52: elektronische Steuerungseinrichtung
- 52a: elektronischer Speicher
- 53: Ventil
- 54: Motor für peristaltische Pumpeinrichtung
- 56a: Temperatursensor
- 56b: Luftdrucksensor
- 56c: Feuchtigkeitssensor
- 58: Deckel
- 62: rippenartige Vorsprünge
- 64: Zufuhrstutzen für Heißdampf-Luftgemisch
- 66: Düsenkopf
- 68: rohrabschnittartiger Anschlussstutzen für erste Zuleitung
- 70: Getränke-Zuleitung
- 72: Getränke-Vorratsbehälter
- 130: weiterer Milchschaum-Zufuhrkanal
- 132: weitere Entspannungskammer
- 138: weiterer Auslassstutzen
- 144: weiterer Getränke-Zufuhrkanal

## Patentansprüche

1. Anordnung (1) zum Aufschäumen von Milch (20) in einem Heißgetränkeautomaten, umfassend eine Aufschäumeinheit (2), einen Heißdampferzeuger (4), welcher mit der Aufschäumeinheit (2) über eine erste Zuleitung (10) zur Zufuhr von Heißdampf (6) verbunden ist, sowie eine Milch-Fördereinrichtung (18), welche der Aufschäumeinheit (2) aufzuschäumende Milch (20) aus einem Milch-Vorratsbehälter (22) über eine zweite Zuleitung (26) mittels einer auf die zweite Zuleitung (26) aufsetzbaren peristaltischen Pump-Einrichtung (18) zuführt, wobei die Milch (20) und der Heißdampf (6) in der Aufschäumeinheit (2) unter Zufuhr von Umgebungsluft (14) zu Milchschaum (34) vermischt werden,
**dadurch gekennzeichnet,**
**dass** die zweite Zuleitung (26) unlösbar mit der Aufschäumeinheit (2) verbunden ist, dass der Heißdampf (6) und die Umgebungsluft (14) der Aufschäumeinheit (2) gemeinsam über die erste Zuleitung (10) zugeführt werden, und dass die Aufschäumeinheit (2) zusammen mit der zweiten Zuleitung (26) als Einheit aus dem Getränkeautomaten entnehmbar ist.

2. Anordnung nach Anspruch 1,
**dadurch gekennzeichnet,**
**dass** die Aufschäumeinheit (2) und die zweite Zuleitung (26) aus demselben Material, insbesondere aus POM, gefertigt sind.

3. Anordnung nach einem der vorhergehenden Ansprüche,
**dadurch gekennzeichnet,**
**dass** die erste Zuleitung (10) lösbar mit der Aufschäumeinheit und/oder lösbar mit dem Heißdampferzeuger (4) verbunden ist.

4. Anordnung nach einem der vorhergehenden Ansprüche,
**dadurch gekennzeichnet,**
**dass** eine Luft-Zufuhreinrichtung (12) vorgesehen ist, welche strömungsmäßig mit der ersten Zuleitung (10) verbunden ist, um der Aufschäumeinheit (2) ein Gemisch aus Heißdampf (6) und Umgebungsluft (14) zuzuführen.

5. Anordnung nach Anspruch 4,
**dadurch gekennzeichnet,**
**dass** die Luft-Zufuhreinrichtung (12) und der Heißdampf-Erzeuger (4) über einen T-förmigen Leitungsabschnitt (8) mit der ersten Zuleitung (10) verbunden sind.

6. Anordnung nach einem der vorhergehenden Ansprüche,
**dadurch gekennzeichnet,**
**dass** die zweite Zuleitung (26) über einen Einweg-Verschluss (50) an den Milch-Vorratsbehälter (22) anschließbar ist.

7. Anordnung nach einem der vorhergehenden Ansprüche,
**dadurch gekennzeichnet,**
**dass** der Heißdampferzeuger (4) und die peristaltische Pumpeinrichtung (18) über eine elektronische Steuerungseinrichtung (52) gesteuert werden, welche die Menge an zugeführtem Heißdampf (6) sowie die Menge an geförderter Milch (20) in Abhängigkeit von den Signalen eines die Temperatur der Umgebungsluft (14) und/oder den Druck der Umgebungsluft (14) und/oder die Luftfeuchtigkeit der Umgebungsluft (14) erfassenden Sensors (56a, 56b, 56c) in Abhängig von Vorgabewerten verändert, die in einem Speicher (52a) der elektronischen Steuerungseinrichtung (52) insbesondere in Form eines Kennfeldes, abgelegt sind.

8. Anordnung nach einem der vorhergehenden Ansprüche,
**dadurch gekennzeichnet,**
**dass** die Aufschäumeinheit (2) ein Gehäuse (36) besitzt, welches eine Mischkammer (28) umfasst, der Heißdampf (6) über eine erste Zuleitung (10) und Milch (20) über eine zweite Zuleitung (26) zur Erzeugung von Milchschaum (34) zugeführt werden, welcher im Anschluss daran über einen Milchschaum-Zufuhrkanal (30) in eine Entspannungskammer (32) eintritt, die an einer ersten Seite durch einen Deckel (58) verschlossen ist und die an einer zweiten Seite einen rohrabschnittsartigen Auslassstutzen (38) für den Milchschaum (34) aufweist,
und **dass** innerhalb des Auslassstutzens (38) ein geschlossener Getränke-Zufuhrkanal (44) verläuft, der sich von der ersten Seite aus durch die Entspannungskammer (32) hindurch erstreckt, und dessen Außenfläche unter Bildung eines spaltförmigen Austrittskanals (40) für den Milchschaum (34) zumindest abschnittsweise im Abstand zur Innenfläche des Auslassstutzens (38) angeordnet ist.

9. Anordnung nach Anspruch 8,
**dadurch gekennzeichnet,**
**dass** die Entspannungskammer (32) einen zylinderförmigen Querschnitt aufweist, und dass der Getränke-Zufuhrkanal (44) unter Bildung eines Ringspalts von der ersten Seite der Entspannungskammer (32) aus koaxial zum rohrabschnittsartigen Auslassstutzen (38) durch das Zentrum der Entspannungskammer (32) hindurch verläuft.

10. Anordnung nach Anspruch 9,
**dadurch gekennzeichnet,**
**dass** die Mischkammer (28) im Bereich der Peripherie der Entspannungskammer (32) angeordnet ist, und dass der Milchschaum-Zufuhrkanal (30) für den in der Mischkammer (28) erzeugten Milchschaum (34) tangential zur Entspannungskammer (32) verläuft, derart, dass der in die Entspannungskammer (32) eintretende Milchschaum (34) vor dem Austritt aus dem rohrabschnittartigen Auslassstutzen (38) in dieser zirkuliert.

11. Anordnung nach einem der Ansprüche 8 bis 10,
**dadurch gekennzeichnet,**
**dass** innerhalb der Entspannungskammer (32) Mittel (62) zum Stören des in der Entspannungskammer zirkulierenden Milchschaum-Stroms vorgesehen sind.

12. Anordnung nach Anspruch 11,
**dadurch gekennzeichnet,**
**dass** die Mittel zum Stören des Milchschaum-Stroms eine oder mehrere rippenartige Vorsprünge (62) umfassen, die im Bereich des Zentrums des zirkulierenden Milchschaum-Stroms angeordnet sind.

13. Anordnung nach einem der Ansprüche 8 bis 12,
**dadurch gekennzeichnet,**
**dass** das Gehäuse (36) aus insgesamt drei einstückigen Formteilen (36a, 36b 36c) zusammengesetzt ist, von denen ein erstes Formteil (36a) die Entspannungskammer (32) mit dem daran geformten rohrabschnittsartigen Auslassstutzen (38) für den Milchschaum (34), ein zweites Formteil (36b) den Deckel (58) mit dem integral an diesem geformten Getränke-Zufuhrkanal (44), einem zur ersten Seite hin offenen rohrabschnittsartigen Zufuhrstutzen (64) für den Heißdampf sowie einem in diesen einmündenden Zufuhrstutzen (48) für die Milch (20), und ein drittes Formteil (36c) einen von der ersten Seite aus in den rohrabschnittsartigen Zufuhrstutzen (64) für den Heißdampf einsetzbaren Düsenkopf (66) mit einem daran geformten Anschlussstutzen (68) zum Anschluss der ersten Zuleitung (10) für den Heißdampf (6) umfasst.

14. Anordnung nach einem der Ansprüche 8 bis 13,
**dadurch gekennzeichnet,**
**dass** das Gehäuse (36) eine neben der Entspannungskammer (32) angeordnet weitere Entspannungskammer (132) mit einem daran angeordneten weiteren Auslassstutzen (138) und einem durch diese hindurch tretenden weiteren Getränke-Zufuhrkanal (144) umfasst, die über einen weiteren Milchschaum-Zufuhrkanal (130) mit der Mischkammer (28) in Strömungsverbindung steht.

## Claims

1. Arrangement (1) for frothing milk (20) in a hot drinks vending machine, comprising a frothing unit (2), a hot steam generator (4) which is connected to the frothing unit (2) via a first supply line (10) to feed hot steam (6), and a milk delivery device (18) which feeds milk (20) to be frothed to the frothing unit (2) from a milk storage container (22) via a second supply line (26) by means of a peristaltic pump device (18) which can be attached to the second supply line (26), whereby the milk (20) and the hot steam (6) are mixed in the frothing unit (2) as ambient air (14) is supplied to the frothed milk (34),
**characterised in that**
the second supply line (26) is connected permanently to the frothing unit (2), that the hot steam (6) and the ambient air (14) are fed together to the frothing unit (2) via the first supply line (10) and that the frothing unit (2) together with the second supply line (26) can be removed as a unit from the drinks vending machine.

2. Arrangement in accordance with claim 1,
**characterised in that**
the frothing unit (2) and the second supply line (26) are made out of the same material, in particular from POM.

3. Arrangement in accordance with one of the foregoing claims,
**characterised in that**
the first supply line (10) is detachably connected with the frothing unit and / or detachably connected with the hot steam generator (4).

4. Arrangement in accordance with one of the foregoing claims,
**characterised in that**
an air feed device (12) is provided whose flow is connected with the first supply line (10) in order to feed a mixture of hot steam (6) and ambient air (14) to the frothing unit (2).

5. Arrangement in accordance with claim 4,
**characterised in that**
the air feed device (12) and the hot steam generator (4) are connected to the first supply line (10) via a tee section pipe (8).

6. Arrangement in accordance with one of the foregoing claims,
**characterised in that**
the second supply line (26) can be connected to the milk storage container (22) via a one-way connector (50).

7. Arrangement in accordance with one of the foregoing claims,
**characterised in that**
the hot steam generator (4) and the peristaltic pump device (18) are controlled by an electronic control device (52) which changes the quantity of supplied hot steam (6) and the quantity of delivered milk (20) as a function of the signals of a sensor (56a, 56b, 56c) acquiring the temperature of the ambient air (14) and / or the pressure of the ambient air (14) and / or the atmospheric humidity of the ambient air (14) in relation to predetermined values which are stored in a memory (52a) of the electronic control device (52), in particular in the form of a characteristics diagram.

8. Arrangement in accordance with one of the foregoing claims,
**characterised in that**
the frothing unit (2) has a housing (36) which encloses a mixing chamber (28) to which hot steam (6) via a first supply line (10) and milk (20) via a second supply line (26) are fed to generate frothed milk (34) which then enters through a frothed milk feed channel (30) into an expansion chamber (32) which is closed on a first side by a cover (58) and which has, on a second side, a tubular section outlet nozzle (38) for the frothed milk (34), and that, inside the outlet nozzle (38), an enclosed drinks feed channel (44) runs which extends right from the first side through the expansion chamber (32), and at least a section of whose external surface is arranged with a gap from the internal surface of the outlet nozzle (38) so as to form a slot-shaped outlet channel (40) for the frothed milk (34).

9. Arrangement in accordance with claim 8,
**characterised in that**
the expansion chamber (32) is cylindrical in cross section and that the drinks feed channel (44) runs from the first side of the expansion chamber (32) coaxially to the tubular section outlet nozzle (38) right through the centre of the expansion chamber (32) while forming an annular slot.

10. Arrangement in accordance with claim 9,
**characterised in that**
the mixing chamber (28) is arranged in the area of the periphery of the expansion chamber (32) and that the frothed milk feed channel (30) for the frothed milk (34) generated in the mixing chamber (28) runs tangentially to the expansion chamber (32) such that the frothed milk (34) entering the expansion chamber (32) circulates in it before leaving out of the tubular section outlet nozzle (38).

11. Arrangement in accordance with one of claims 8 to 10,
**characterised in that**
means (62) to agitate the frothed milk stream circulating in the expansion chamber are provided inside the expansion chamber (32).

12. Arrangement in accordance with claim 11,
**characterised in that**
the means to agitate the frothed milk stream comprise one or more rib-like projections (62) which are arranged in the region of the centre of the circulating frothed milk stream.

13. Arrangement in accordance with one of claims 8 to 12,
**characterised in that**
the housing (36) is composed in total of three one-piece shaped components (36a, 36b, 36c) of which a first shaped component (36a) comprises the expansion chamber (32) with the tubular section outlet nozzle (38) for the frothed milk (34) formed on it, a second shaped component (36b) comprising the cover (58) with the drinks feed channel (44) formed integrally on it together with a tubular section feed nozzle (64) for the hot steam, open towards the first side, and a feed nozzle (48) for the milk (20) opening out into it, and a third shaped component (36c) comprising a nozzle head (66) insertable outwards from the first side into the tubular section feed nozzle (64) for the hot steam with a connection nozzle (68) formed on it to connect the first supply line (10) for the hot steam (6).

14. Arrangement in accordance with one of claims 8 to 13,
**characterised in that**
the housing (36) comprises a further expansion chamber (132) arranged next to the expansion chamber (32) with a further outlet nozzle (138) arranged on it and a further drinks feed channel (144) running through the latter whereby the said channel has a flow connection with the mixing chamber (28) through a further frothed milk feed channel (130).

## Revendications

1. Agencement (1) pour le moussage de lait (20) dans un distributeur de boissons chaudes, comprenant une unité de moussage (2), un générateur de vapeur (4) relié avec l'unité de moussage (2) via une première conduite d'amenée (10) pour l'alimentation en vapeur (6) ainsi qu'un dispositif d'entrainement de lait (18) qui alimente l'unité de moussage (2) en lait à mousser (20) au départ d'un réservoir de lait (22) via une deuxième conduite d'amenée (26) au moyen d'un dispositif de pompe péristaltique (18) pouvant se poser sur la deuxième conduite d'amenée (26), dans lequel le lait (20) et la vapeur (6) sont mélangés dans l'unité de moussage (2) en y adjoignant de l'air environnant (14) pour donner de la mousse de lait (34), **caractérisé en ce que** la deuxième conduite d'amenée (26) est reliée de façon indissociable à l'unité de moussage (2), **en ce que** la vapeur (6) et l'air environnant (14) sont amenés à l'unité de moussage (2) conjointement via la première conduite d'amenée (10) et **en ce que** l'unité de moussage (2) peut se retirer du distributeur de boissons sous forme d'unité avec la deuxième conduite d'amenée (26).

2. Agencement selon la revendication 1, **caractérisé en ce que** l'unité de moussage (2) et la deuxième conduite d'amenée (26) sont fabriquées en un matériau identique, en particulier en POM.

3. Agencement selon l'une des revendications précédentes, **caractérisé en ce que** la première conduite d'amenée (10) est reliée de façon dissociable avec l'unité de moussage et/ou de façon dissociable avec le générateur de vapeur (4).

4. Agencement selon l'une des revendications précédentes, **caractérisé en ce qu'**un dispositif d'alimentation en air (12) est prévu et relié dans le sens d'écoulement avec la première conduite d'amenée (10), afin d'alimenter l'unité de moussage (2) en un mélange de vapeur (6) et d'air environnant (14).

5. Agencement selon la revendication 4, **caractérisé en ce que** le dispositif d'alimentation en air (12) et le générateur de vapeur (4) sont reliés à la première conduite d'amenée (10) via un segment de conduite en forme de T (8).

6. Agencement selon l'une des revendications précédentes, **caractérisé en ce que** la deuxième conduite d'amenée (26) peut être attachée au réservoir de lait (22) via un raccord à usage unique (50).

7. Agencement selon l'une des revendications précédentes, **caractérisé en ce que** le générateur de vapeur (4) et le dispositif de pompe péristaltique (18) sont commandés via un dispositif de commande électronique (52) qui modifie la quantité de vapeur (6) ainsi que la quantité de lait (20) adjointe selon les signaux d'un capteur (56 a, 56 b, 56 c) saisissant la température de l'air environnant (14) et/ou la pression de l'air environnant (14) et/ou l'humidité de l'air environnant (14) en fonction de valeurs de consigne enregistrées dans une mémoire (52 a) du dispositif de commande électronique (52) en particulier sous la forme d'un diagramme caractéristique.

8. Agencement selon l'une des revendications précédentes, **caractérisé en ce que** l'unité de moussage (2) possède un carter (36) qui englobe une chambre de mélange (28) alimentée en vapeur (6) via la première conduite d'amenée (10) et en lait (20) via une deuxième conduite d'amenée (26) pour la production de mousse de lait (34), laquelle pénètre immédiatement après via un canal d'alimentation en mousse de lait (30) dans une chambre de détente (32) fermée sur un premier côté par un couvercle (58) et présentant sur un deuxième côté un embout de sortie tubulaire (38) pour la mousse de lait (34), et **en ce qu'**au sein de l'embout de sortie (38) se trouve un canal d'amenée de boisson fermé (44) qui s'étend du premier côté à travers la chambre de détente (32) et dont la surface extérieure est disposée en formant un canal de sortie en forme de fente (40) pour la mousse de lait (34), au moins de façon partielle en écartement par rapport à la surface intérieure de l'embout de sortie (38).

9. Agencement selon la revendication 8, **caractérisé en ce que** la chambre de détente (32) présente une section transversale de forme cylindrique et **en ce que** le canal d'amenée de boisson (44) s'étend en formant une fente annulaire au départ du premier côté de la chambre de détente (32) de façon coaxiale vers l'embout de sortie tubulaire (38) à travers le centre de la chambre de détente (32).

10. Agencement selon la revendication 9, **caractérisé en ce que** la chambre de mélange (28) est disposée dans la zone périphérique de la chambre de détente (32) et **en ce que** le canal d'alimentation en mousse de lait (30) pour la mousse de lait (34) produite dans la chambre de mélange (28) s'étend de façon tangentielle à la chambre de détente (32) de sorte que la mousse de lait (34) qui entre dans la chambre de détente (32) circule dans cette dernière avant la sortie par l'embout de sortie tubulaire (38).

11. Agencement selon l'une des revendications 8 à 10, **caractérisé en ce que** des moyens (62) de perturbation du flux de mousse de lait qui circule dans la chambre de détente sont prévus au sein de la chambre de détente (32).

12. Agencement selon la revendication 11, **caractérisé en ce que** les moyens de perturbation du flux de mousse de lait englobent une ou plusieurs saillie(s) en forme de nervure (62) disposée(s) dans le centre du flux de mousse de lait circulant.

13. Agencement selon l'une des revendications 8 à 12, **caractérisé en ce que** le carter (36) se compose au total de trois pièces façonnées distinctes (36 a, 36 b, 36 c) dont une première pièce façonnée (36 a) englobe la chambre de détente (32) avec l'embout de sortie tubulaire (38) qui y est formé pour la mousse de lait (34), une deuxième pièce façonnée (36 b) englobe le couvercle (58) avec le canal d'amenée de boissons (44) intégralement formé sur ce dernier, un embout d'amenée tubulaire (64) ouvert vers le premier côté pour la vapeur ainsi qu'un embout d'amenée (48) pour le lait (20) débouchant dans ce dernier, et une troisième pièce façonnée (36 c) englobe au départ du premier côté dans l'embout d'amenée tubulaire (64) pour la vapeur une tête de buse insérable (66) dotée d'un embout de sortie (68) pour le raccordement de la première conduite d'amenée (10) pour la vapeur (6).

14. Agencement selon l'une des revendications 8 à 13, **caractérisé en ce que** le carter (36) englobe à côté de la chambre de détente (32) une chambre de détente supplémentaire (132) dotée d'un embout de sortie supplémentaire (138) et d'un canal d'amenée de boissons (144) supplémentaire la traversant, laquelle se trouve en relation d'écoulement avec la chambre de mélange (28) via un canal d'amenée de mousse de lait supplémentaire (130).
